# EUROPEAN PATENT APPLICATION

(11) **EP 2 463 008 A1**
(43) Date of publication of application: **13.06.2012**
(21) Application number: 10015511.8
(22) Date of filing: 10.12.2010
(51) Int. Cl.: B01D 46/10, B01D 46/00, B01D 45/14, B01D 50/00

(54) **A separator for separating a fluid flow of gas with a dispersed phase**

(71) Applicant: NTNU Technology Transfer AS, 7491 Trondheim (NO)
(72) Inventor: Dorao, Carlos, A., 7012 Trondheim (NO); Fernandino, Maria, 7012 Trondheim (NO)
(74) Representative: Taylor, Adam David

(57) **Abstract**

The invention is separator for separating a fluid flow of gas with droplets (G, L), comprising an inlet (10) for the gas to be separated to a rotor (4) with a mesh (5) for coalescing the droplets (L) and releasing coalesced liquid (L') from a peripheral part (50) of the rotor (4). Novel features of the separator is that
- the mesh (5) generally forms an axial passage for said gas (G) from the inlet (10), through said rotor (4), to an outlet (20) for liquid depleted gas (G'), and
- the rotor (4) with the mesh (5) is arranged for transporting the coalesced liquid (L') laterally out of the axial passage to a wall (6) arranged for receiving the coalesced liquid (L').

## Description

The present invention relates to a separator for separating a fluid flow of gas with a dispersed phase. The dispersed phase may be a liquid or a solid or a combination of both. The liquid may be present as droplets in the gas, or may be liquefied to a spray of droplets in the gas, and then separated using the present invention. More specifically, an embodiment of the invention comprises a rotor with a mesh for the separation of the dispersed phase from the gas. The dispersed phase will impact the rotating mesh and be flung out of the mesh by the centrifugal force. The dispersed phase will be collected on a surrounding screen wall, allowing depleted gas to flow axially out of the rotating mesh. The mesh will be axleless to avoid creep flow through along the centre axe of the unit where the local velocity of the mesh, as counted in the rotational direction, is low.

In sharp contrast to the previous systems, the present invention is a separator system in which the physical separation characteristics may be altered according to need, simply by changing the rotational speed of the system.

### Background art

Given the utility of separation systems a large number of systems have been explored over the years. Amongst those which can be mentioned are cyclone separators such as described in US 6251168, US 5334239. Other systems include contraction/expansion systems such as those shown in US2006/0225386. Rotating drum systems for the removal of minor amounts of oil contaminated air are shown in a number of systems such as US1075736, US6640792, US3045411, DE102004048539, US6627166. US2003089656 shows an oil filter mounted on a rotor in an engine. The oil filter is arranged with an annular, axially directed inlet which is oppositely directed with respect to the axial outlet. EP1344559 shows a similar arrangement. W02009099339 A1 describes a separation device for separating liquid from an inlet flow which mainly contains gas, the separation device comprising a container or a pipe section with an outlet for gas from the container or the pipe section, an outlet for liquid from the container or pipe section and an inlet for the inlet flow to the container or pipe section. The separation device further comprises: a flow manifold arranged to receive and put the inlet flow in movement towards a porous pipe body extending towards the gas outlet and arranged to receive the inlet flow, wherein part of the flow is flowing through the tubular body to the gas outlet, while the remaining of the flow is flowing through the porous wall of the tubular body, and an annular space consisting of the volume between the tubular body and the container wall or pipe section, the annular space is open for gas flow towards the gas outlet.

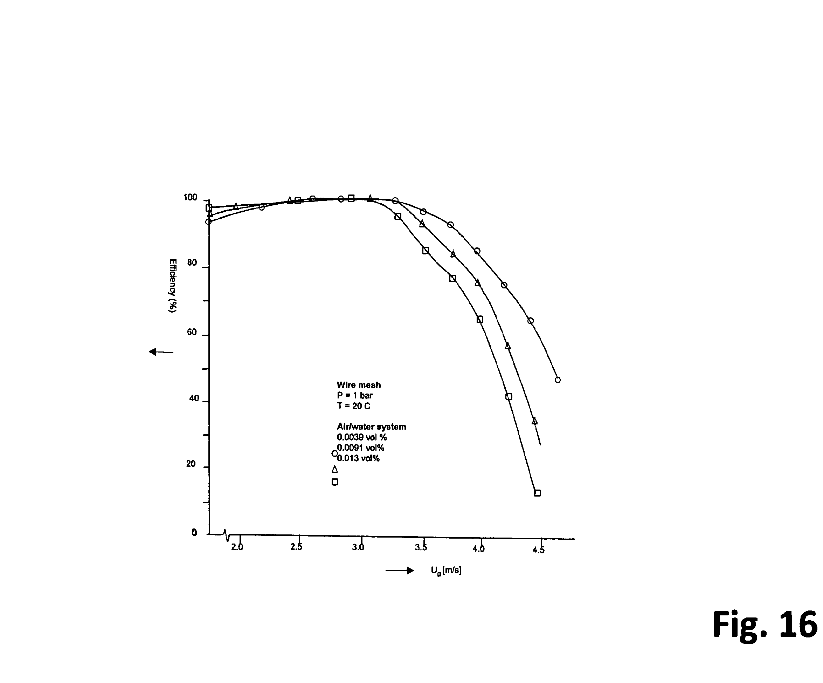

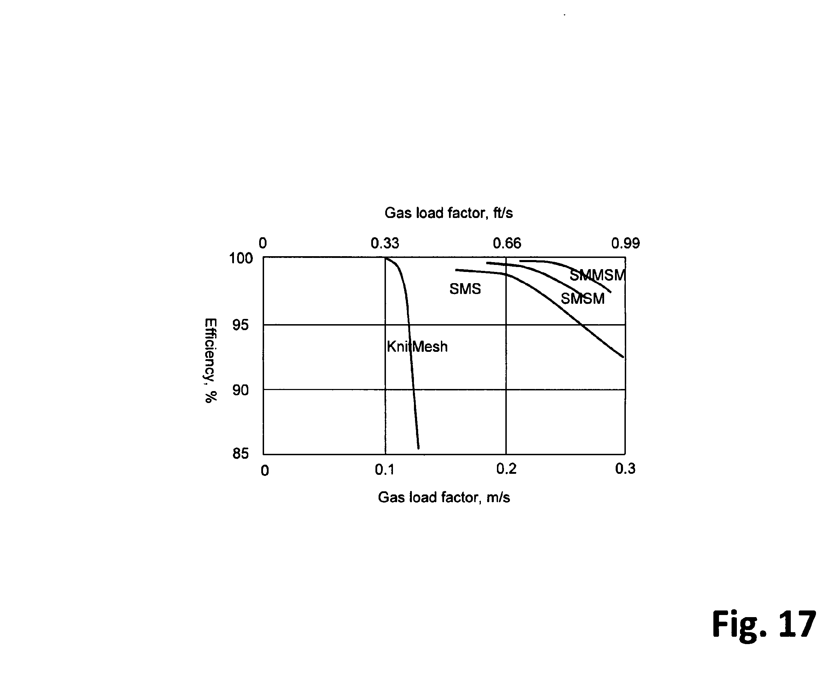

Measurements and comparisons of separation efficiency have been published in C. Verlan (1989): "Performance evaluation of impingement gas-liquid separators in Multiphase Flow" in Proceedings of the 4th International Conference. That paper shows percentage separation efficiency versus superficial gas velocity (Ug) expressed in m/s for a velocity range between 2.0 m/s and 4.5 m/s for an air/water system, please see below with respect to Fig. 16. Further, separation efficiency is also discussed in a sales brochure called "Gas/Liquid Separation Technology" by Sulzer Chemtech, and shows percentage separation efficiency versus gas load factor (GLF) values between 0.0 and 0.3 m/s, please see below for Fig. 17.

The above systems are limited in their separation ability by the physical characteristics which they present. In sharp contrast to the above systems, the present invention is a separator system in which the physical separation characteristics may be altered according to need, simply by changing the rotational speed of the system. In this manner the separator may handle a very wide range of different flows, ranging from almost pure liquid flows to very fine mists.

### Short summary of the invention

Some of the problems in the background art are solved by the invention which is a separator for separating a fluid flow of gas with a dispersed phase comprising an axial inlet for said gas with the dispersed phase to a rotating rotor. The rotor comprises a mesh for collecting said dispersed phase. Some of the novel features of the invention comprise the mesh forming generally an axial passage for said gas from the inlet to an outlet for depleted gas. The mesh should be axleless and the rotor with said mesh is arranged for releasing the collected dispersed phase laterally out of the axial passage. The dispersed flow is defined as being a flow in which gas, liquid and solids may be present in varying percentages.

In one embodiment of the invention the rotor is arranged for being operated at varying speeds according to the composition of the inlet stream. The composition of the inlet stream may vary from being a finely dispersed mist to being almost a pure liquid flow.

The separator may in an embodiment of the invention be provided with a fluid inlet flow splitter arranged for diverting flow from the central area of the rotor. The angular speed of the liquid at the centre of a rotating body is very low, and there might not be adequate impetus for the fluid to move to the periphery of the mesh. By arranging a flow splitter to divert the flow from the centre of the mesh the fluid is sent to regions in which the speed will be sufficient.

The separator may in an embodiment of the invention be provided with a tank surrounding said rotor, the tank being arranged for receiving dispersed fluid laterally released from said axial passage.

In an embodiment of the invention comprising the tank the mesh does not fill the entire rotor volume, such that a portion of the fluid flow is diverted directly to the tank. This embodiment has been shown to increase separation effectiveness.

In an embodiment of the invention the fluid level within the tank is controlled by a level controller (LC) comprising a sensor (s) and a controlled valve. Such level controllers are important if pumps are arranged for removing fluid from the tank. To the skilled person it is known that pumps need to be provided with a liquid at a certain minimal pressure to operate correctly. This pressure may vary, but if the pressure provided is too low pumps may function incorrectly. Use of level controllers may advantageously avoid flooding of the system.

In an embodiment of the invention in which the tank is compartmentalised such that a first tank volume receives the dispersed phase, and one or more second tank volumes are in fluid communication with the first tank volume and arranged for receiving fluid from the first. Such secondary tank volumes may be arranged for providing time for the fluid to degas. If larger volumes of liquids are envisaged removed, an advantageous embodiment of the invention provides a separate larger liquid chamber below or adjacent the first annular space. A separate flow pipe is advantageously arranged for transporting liquid from the first annular chamber to the second.

In an embodiment of the invention a flushing line (71) is arranged for providing flushing fluid to the tank such that particulates are removed. Such flushing fluid may either be a liquid from an external source, or be the separated fluid itself.

In an embodiment of the invention a recirculation pipe is arranged for recirculating at least a portion of the outlet flow back to the inlet. The advantage of using a recirculation line is to remove even further any remaining droplets in the as flow.

The mesh may in an embodiment be structurally self-supporting, generally forming the main part of the rotating body. The mesh may in an embodiment of the invention form a regular pattern. In an advantageous embodiment of the invention the mesh may comprise a permeable, structured metal foam. Metal foams are defined as being a metallic material containing voids. In the current sense, the permeable metal foams used in the invention has voids which form a continuous network.

The foam being structured it is now possible to construct graded meshes in which the mesh is coarser at the gas with liquid droplets inlet becoming increasingly fine towards the outlet. This grading will further reduce the pressure drop within the mesh.

In an advantageous embodiment of the invention the rotor comprises an open-ended rotating barrel for structurally supporting the mesh. The barrel is cylindrical according to an embodiment of the invention, but other shapes may be used such as tapered or rounded rotational bodies.

An advantage of the invention is that gas may pass axially, straight through the rotor mesh while droplets or solids are caught and removed by the rotating mesh, and may be collected by the surrounding tank and drained therefrom.

Another advantage of an embodiment of the invention is that as liquid is centrifuged by the rotating mesh and allowed to escape radially out of the path of the flow, the risk of re-entrainment of droplets into the gas stream is significantly reduced because the droplets do not reside for long time within the mesh. With respect to the previously known mesh systems the lateral opening in the lateral wall of the wire mesh helps to remove the liquid more efficiently. In particular in arrangements of the invention it which it is arranged vertically, one may now avoid dripping of big droplets back into the inlet stream.

According to the present invention flooding of the mesh is avoided, and pressure peaks within the separation system is consequently reduced.

Another advantage of the invention lies in that instead of the coalesced liquid being forced upstream against the incoming gas flow as with some of the background art, the liquid film formed will deviate in a lateral direction from the gas and they will move with reduced relative velocities through the mesh, thus coalesced fluid is quickly removed. The reduced relative velocities gives a significantly reduced shear effect of the gas flow on the liquid film. This may significantly reduce the problem of re-entrainment of liquid back into the gas flow.

An advantage of the invention is the low pressure drop between the inlet and the outlet. This is attributed to the lower volume of liquid present in the mesh than for separators according to the background art.

An advantage of an embodiment of the invention is a pressure alignment tube leading from the liquid receiving chamber about the rotor and back through a wall to the downstream gas outlet so as for balancing the pressure and thus controlling the flow to run axially through the separator.

The separator according to the invention represents a significant improvement over the device of US2006/0225386 as the separator according to the invention will rapidly and continuously remove the coalesced liquid in the generally radial directions, instead of running the risk of blocking the longitudinally arranged pipes of the cited US-application.

An advantageous and surprising effect of the device according to the invention is that the coalescing mesh in some instances removes droplets from the gas flow even when rotating slowly or not rotating at all. Liquid is, despite the rotor (4) with the mesh (5) being halted, still coalesced in the mesh and liquid may still be drained to the collecting tank even with the rotating coalescing mesh halted, and the gas flowing through is depleted in its liquid content.

The device according to the invention is particularly well adapted in the separation of petroleum fluids as are typically produced from well streams. These streams are typically large volume streams which traditionally require large separation units. The well stream typically comprise solids, water and other contaminants in addition to the petroleum gas and liquid.

When separating petroleum fluids it is advantageous to allow the separated fluid collected at the lateral wall to reside for a certain amount of time such that it may degas. Such degassing may take place in the annular space surrounding the rotor.

In an advantageous embodiment of the invention, the rotor is situated in the contraction zone of a gas contraction/expansion arrangement. Similar arrangements of gas contraction and expansion are known from the background art, but typically present larger pressure drops which the system according to the invention will avoid.

In an advantageous embodiment of the invention the liquid chamber is furnished with an internal flushing unit such that liquid is circulated through the tank. Using such flushing it is possible to flush out solids or avoid hydrate or ice formation in the mesh.

In a further embodiment of the invention the liquid chamber may be furnished with heating systems in order to counteract hydrate and/or ice formation.

### Short figure captions

The invention is illustrated in the attached drawings, of which:
Fig. 1 illustrates an enveloped rotating mesh with a gas inlet with a collector wall arranged coaxially with the axis of the rotating mesh.
Fig. 2 is an illustration of a rotatable mesh with an inlet portion for a gas flow with droplets illustrated from the left side and exhibiting the property of coalescing the droplets from the gas flow and an outlet for liquid depleted gas illustrated towards the right side. The rotatable mesh may be provided with a permeable envelope forming a surface about and rotatable with the rotatable mesh. The envelope shown is cylindrical but other shapes such as a rotor with tapered or rounded ends are envisaged.
Fig. 3 is similar to Fig. 1 and illustrates a rotatable wire mesh. Interstices formed by the space between the wires are generally continuous throughout the wire mesh and forming escape paths to the outer parts of the continuous network of interstices which may be called apertures in the surface of the rotor.
Fig. 4 illustrates a longitudinal section of a pipe with an enveloped rotating mesh held in peripherally arranged bearings of the mesh. The bearings may be arranged in upper and lower delimiting plates forming a collector compartment about the rotating mesh in the pipe.

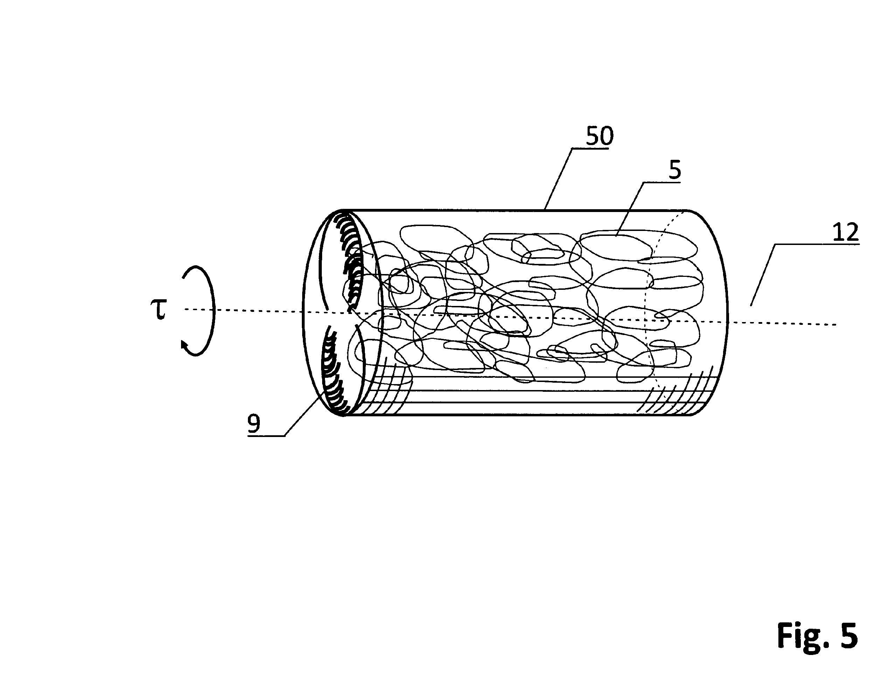

Fig. 5 illustrates an embodiment of the invention wherein a turbine is arranged with the rotating mesh for being driven by the through flow.
Fig. 6 is an illustration of an embodiment of the invention having a vertically arranged supply pipe for gas with droplets to the rotor and a vertically arranged pipe for the liquid depleted resulting gas. The collector wall forms part of a tank, here in a straight cylindrical embodiment, surrounding the inlet, the rotor with the mesh, and the outlet.
Fig. 7 is a longitudinal section of which a rotatable mesh cylinder is arranged flush with an inlet pipe for the gas containing droplets and the dry gas outlet, with a liquid drained cylindrical collector chamber generally forming a cylindrical widening of the axially arranged inlet and outlet pipes.

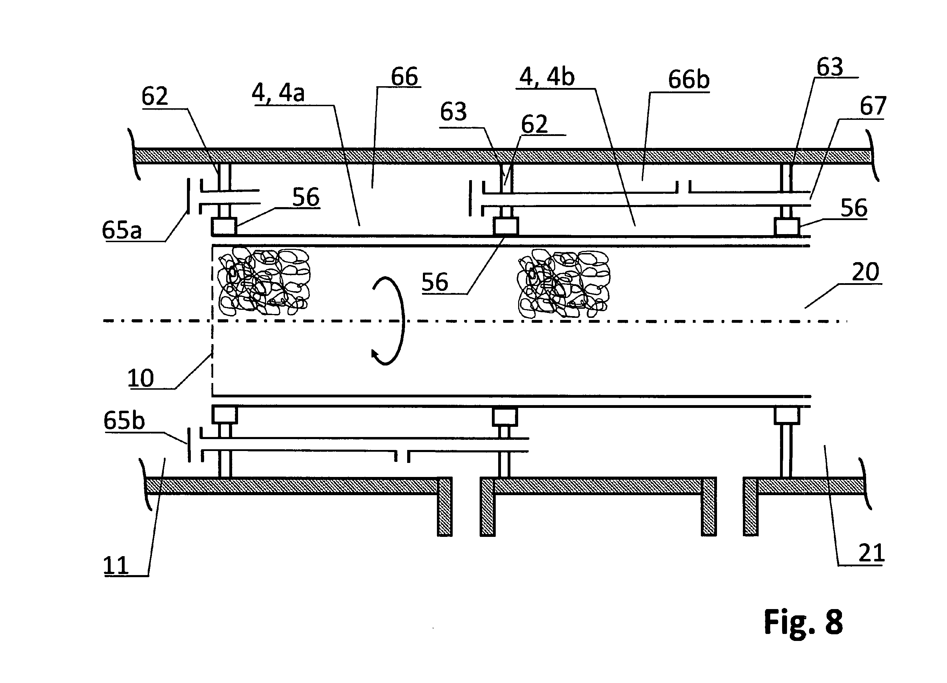

Fig. 8 is a longitudinal section trough a stacked or cascading arrangement of a rotating mesh arranged rotating within two separately drained collector compartments separated by an intermediate partition wall forming a wall for the collector compartment about the first part of the rotating mesh and also forming a wall for a consecutive collector compartment. The collector compartments may be provided with separate drain outlets for separated liquids or a common outlet. Further the separators may be provided with separate recirculation flow tubes for aligning gas pressures. The meshes can typically have different aperture sizes.
Fig. 9 illustrates an embodiment of the invention comprising a bundle of separators arranged to work in parallel. The bundle may be arranged within a common enveloping pipe or tank.
Fig. 10 illustrates an embodiment of the invention with the rotating mesh arranged in a throat in a pipe wherein condensated matter in the gas flow may be extracted before the gas flow is again expanded.
Fig. 11 is an illustration of a series of separators arranged consecutively and working on a large flow to be separated which is split and sent to different separators. The separators may be arranged generally along the same axis. Further, the separators may be arranged working on each their separate portion of the flow. The meshes may typically have different mesh sizes.
Fig. 12 is a section of an embodiment of the invention in which there is a radial gap at the upstream part of the mesh. This has been shown to increase separation efficiency.
Fig. 13 shows percentage separation efficiency versus gas load factor (GLF) values between 0.06 and 0.26 m/s for an embodiment of the invention.
Fig. 14 shows pressure drop versus gas load factor, GLF for the same GLF values as used in Fig. 13 for an embodiment of the invention.
Fig. 15 shows percentage separation efficiency versus superficial gas velocity (Ug) expressed in m/s for velocity range between 2.0 m/s and 4.5 m/s for an embodiment of the invention.
Fig. 16a is redrawn from C. Verlaan (1989), Performance evaluation of impingement gas-liquid separators in Multiphase Flow, Proc. of the 4th International Conference, and shows percentage separation efficiency versus superficial gas velocity (Ug) expressed in m/s for velocity range between 2.0 m/s and 4.5 m/s for an air/water system.
Fig. 16b is a comparison between the curves of Fig. 16a averaged to one single graph in the left range between 1 and 4.5 m/s and a wire mesh with lateral opening according to the present invention with values in the range between 7 and 13.5 m/s.
Fig. 17 is redrawn from a sales brochure called "Gas/Liquid Separation Technology" by Sulzer Chemtech, and shows percentage separation efficiency versus gas load factor (GLF) values between 0.1 and 0.3 m/s.
Fig 18 is an illustration of an embodiment in which liquid is recirculated such that hydrates solids or other particulates are removed.

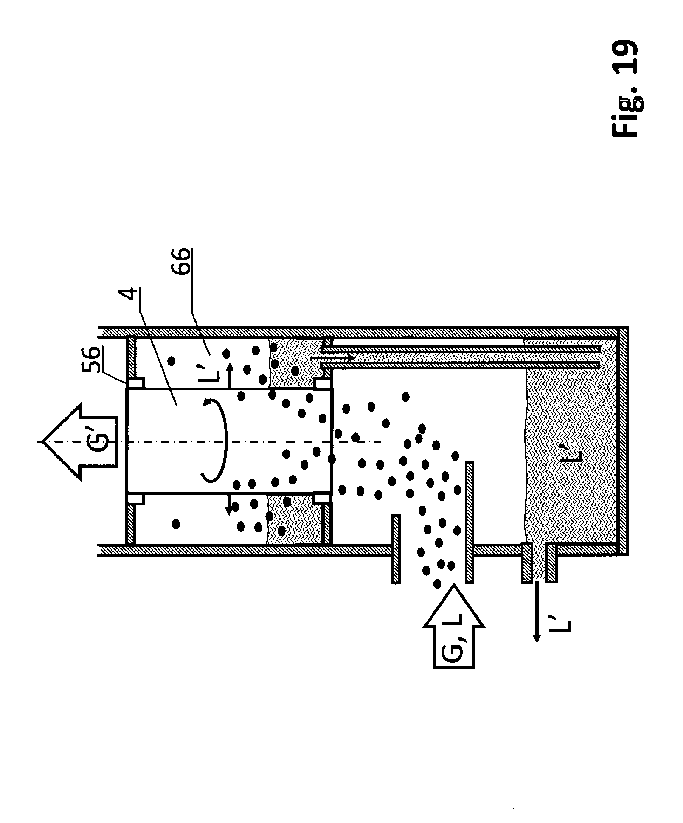

Fig 19 is an illustration of an embodiment of the invention in which a second tank volume is in fluid communication with the first.
Fig 20 is an illustration of an embodiment of the invention in which a flow splitter is arranged for distributing fluid away from the center of the mesh.
Fig 21 is an illustration of an embodiment of the invention in which a level controller is arranged for controlling the fluid level in the first tank volume.

### Description of embodiments of the invention

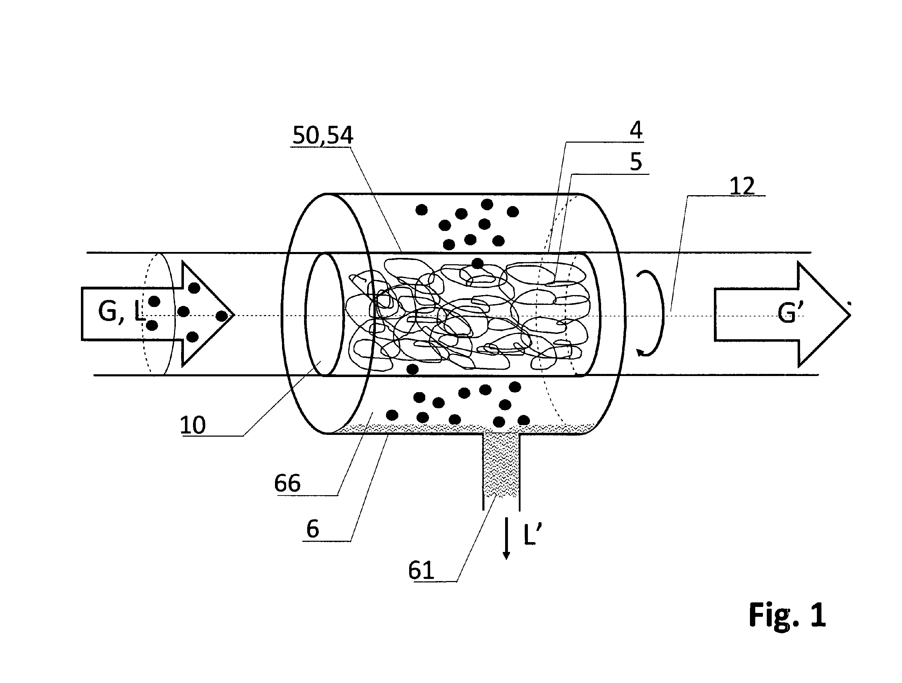

Below embodiments of the invention are described. The embodiments of the invention are illustrated in the above mentioned drawings. In a basic embodiment of the invention, such as illustrated in Fig. 1, a separator for separating an input fluid such as a flow of gas (G) with a dispersed phase (L) such as liquid, is shown. By using the term dispersed phase is meant a phase which can include solids liquids or the like. The dispersed media may include a number of objects such as some sand or solid particles, or such as liquid sprays, droplets, or even liquid lumps. For ease of understanding, droplets is used in the following. The embodiment of the separator comprises an inlet channel (11) for the gas with droplets (G, L) to an inlet (10) to a rotor (4). The rotor (4) comprises a mesh (5) for coalescing said droplets (L) and releasing coalesced liquid (L') from a permeable peripheral part (50) of said rotor (9). The rotor (4) is arranged for revolving about an axis (12). This axis is not a physical axis but a notional axis. In the preferred embodiment of the invention the mesh is self supporting. In the preferred embodiment, the rotating mesh is axleless. In the prior art, use of a central axis is proposed. It has been shown that such an axis will result in a creep flow alongst the axis. The various embodiments mentioned above may be combined.

It is hypothesised that the effectiveness of the current invention is explained by the following. In a rotating system, a particle heavier than the carrying fluid will be accelerated towards the outside in the radial direction due to the centrifugal force. The tangential velocity of the particle will change as it travels towards the periphery. In the case of a free irrotational vortex the tangential velocity decreases exponentially in the radial direction, while in a solid body rotation, one has a forced rotational vortex where the tangential velocity increases linearly in the radial direction. Typical cyclones operate in a combined mode, with solid body rotation close to the center and a free irrotational vortex for larger radii. In the case of the current invention, the rotation is closer to that of a solid body and therefore the particle is always accelerated as it travels towards the periphery. Due to this difference in the velocity profile, the centrifugal force on the particle is larger in the case of the current invention than in cyclones, which will result in higher efficiency.

In that the device is a rotating device the rotation speed is crucial. By varying the rotation speed one may handle different gas liquid flows according to need. This feature of the invention has hitherto never been shown in a separation device. The usage area of a separation device is usually defined by the K-factor, which is a measure of the gas load factor. In all separation devices one defines which flows can be separated by the K-factor, a factor which is always defined by the physical properties of the unit. In contrast to this the present invention actually allows varying the K-factor over a large area merely by varying the rotational speed of the device. Hence it is now possible to vary K-factor without changing the physical properties of the unit.

The mesh (5) as such may be a steel mesh or a piece of expanded metal, a high strength fibre mesh or the like which may withstand the mechanical forces of pressure gradient, rotational forces and erosion from the passing gas. The mesh (5) may be any porous, permeable media suitable for the separation task. The mesh (5) may be structurally self-supported. The mesh may in an embodiment be structurally self-supporting, generally forming the main part of the rotating body. Hence in an embodiment of the invention the invention comprises the separator as described above with a self supported mesh.

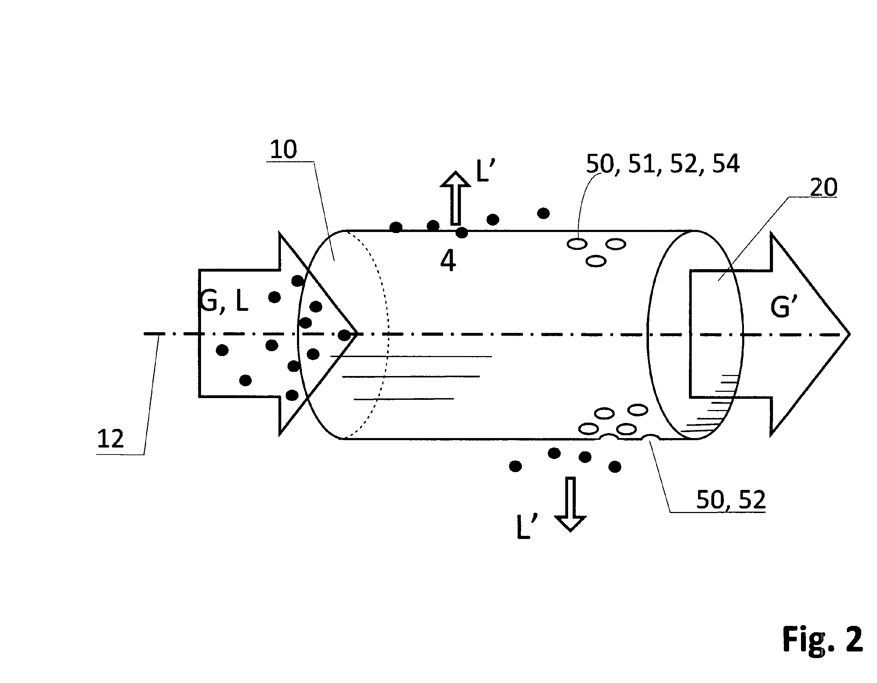

The mesh (5) of the rotor (4) may be formed in a number of ways. One such way is to spiral wind up a mat and fixing the so formed rotor. Another way of forming the mesh (5) of the rotor (4) is to stack a series of circular mats. The so formed rotors (4) may be structurally self-supported or structurally supported by an open-ended barrel as illustrated e.g. in Figs. 1 and 2.

The mesh may in an embodiment of the invention form a regular pattern.

In an advantageous embodiment of the invention the mesh may comprise a structured metal foam. Metal foams are defined as being a metallic material containing voids. In the current sense, the metal foams used in the invention form a continuous network and co-exists with a network of empty space which is also interconnected.

The foam being structured it is now possible to construct graded meshes in which the mesh is coarser at the gas with liquid droplets inlet becoming increasingly fine towards the outlet. This grading will further reduce the pressure drop within the mesh.

The mesh (5) generally forms an axial passage for the gas (G) from said inlet (10), through said rotor (4), to an outlet (20) to an outlet channel (21) for liquid depleted gas (G'), please see e.g. Figs. 2, 3 and 4. In an advantageous embodiment of the invention, the outlet (20) for liquid depleted gas (G') is also axial.

The rotor (4) with the mesh (5) is arranged for moving the coalesced liquid (L') laterally out of the axial passage of the gas (G), thereby depleting the gas (G) to a liquid-depleted gas (G'), and leading the coalesced liquid separately through a passage to a wall (6) arranged for receiving said coalesced liquid (L').

A second reason for why there is less entrainment is that the gas and the liquid film will be rotating in the same direction such that there will be less relative movement than in ordinary separators in which the walls are static. I.e. the relative velocity between gas and liquid is reduced.

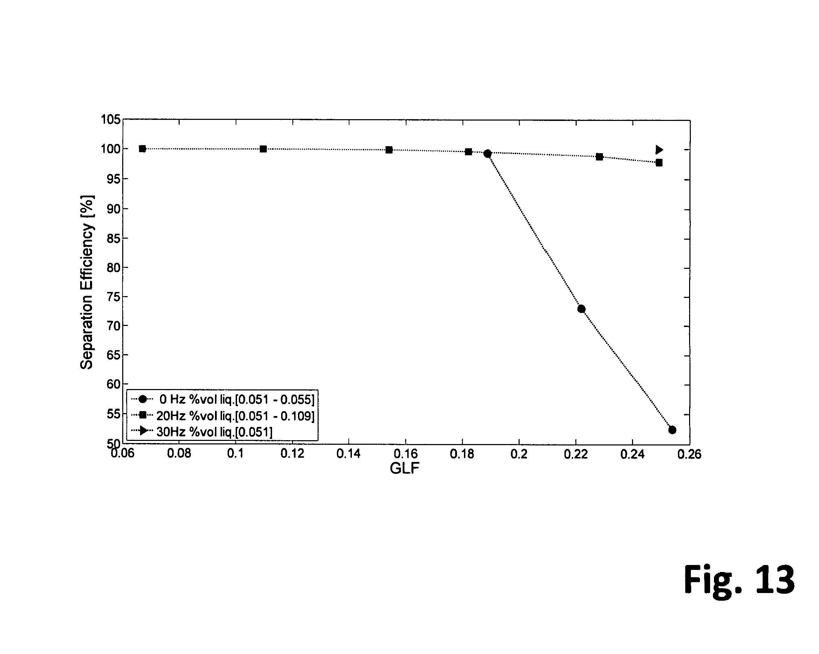

A surprising effect as shown by experimental results shown in Fig. 13, is that the coalescing mesh removes droplets from the gas flow even when rotating slowly or not rotating at all. This was discovered during testing of the principle of the invention in the laboratory. This phenomenon was later tested for at zero rotational speed. Further tests were conducted using rotational speeds of 20 Hz and 30 Hz. Liquid was coalesced in the rotor (4) and liquid was drained to the collecting tank even with the coalescing meshed halted, and the gas flowing through was depleted in its liquid content. There is a sharp decrease in efficiency for zero rotational speed of the mesh at a gas load fraction GLF at about 0.19 m/s, decreasing from a separation efficiency at near 100 % to below 55 % for GLF at about 0.25. For 20 Hz rotational speed of the mesh the separation efficiency remains at high separation efficiencies above 98% for GLF at 0.25, and at 30 Hz the separation efficiency remains above 99 % for GLF = 0.25.

Commercial separators from Sulzer are described in a sales brochure called "Gas/Liquid Separation Technology" by Sulzer Chemtech. The performance of some of those separators are illustrated in graphs in Fig. 17 and show percentage separation efficiencies versus gas load factors (GLF) values between 0.1 and 0.3 m/s. If the graphs of the background art in Fig. 17 are compared with the graphs of results from Fig. 13, Fig. 13 indicates that the separator according to the present invention has better performance. However, the comparison is difficult as Sulzer's brochure does not provide details of the conditions such as fluids involved, or temperature and pressure.

The mesh (5) may not necessarily be self-supported. In an embodiment of the separator the rotor (4) may comprise a rotating barrel (54) for structurally supporting the mesh (5). The barrel (54) shown e.g. in Fig. 1 is of cylindrical shape but other rotational bodies are envisaged. The barrel (54) may have a peripheral wall (51) being permeable for said coalesced liquid (L') or provided with apertures (52) in fluid communication with the mesh (5), for releasing the coalesced liquid (L') peripherally. The barrel (54) supporting the mesh (5) may also be arranged to release the liquid (L') axially.

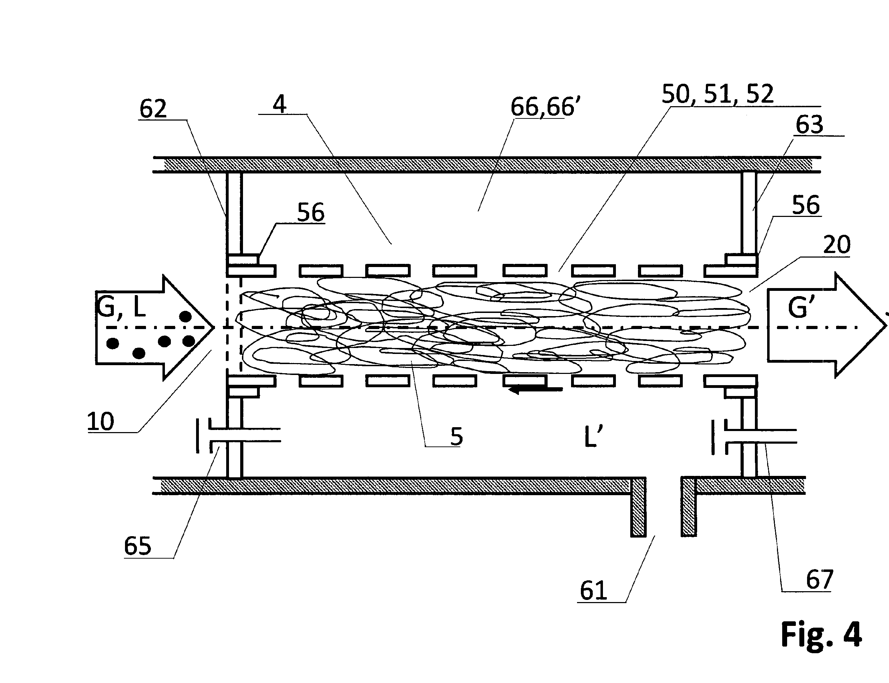

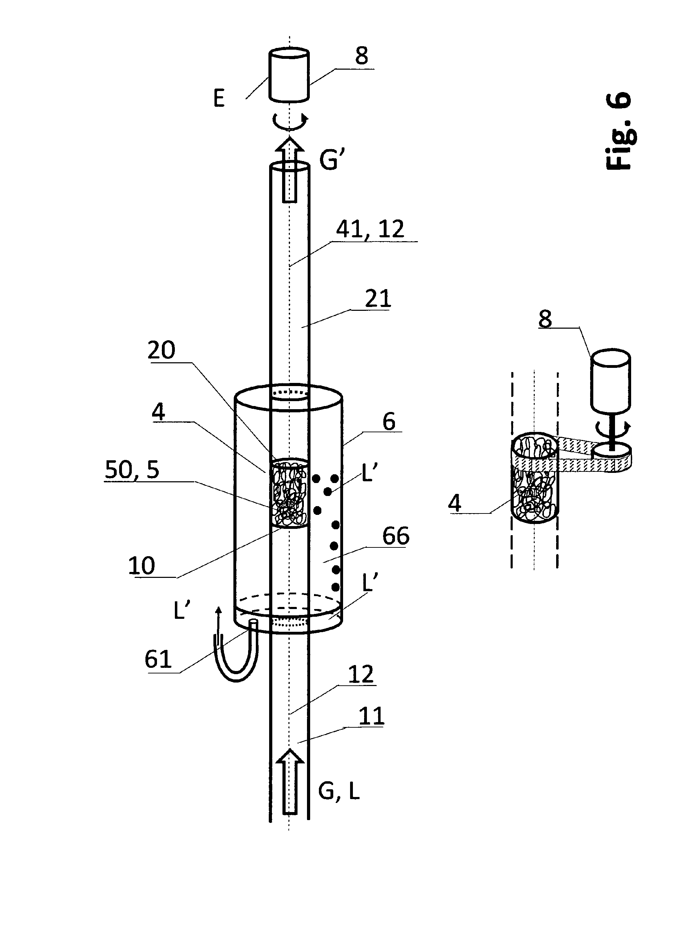

In an embodiment of the invention the separator with the liquid collecting wall (6) may be provided with one or more drains (61) for draining liquid (L') away from the separator device, please see Fig. 1, Fig. 4, Fig. 6 and Fig. 7. The liquid collecting wall (6) may form part of a tank (66) surrounding part of the inlet channel (11) with the inlet (10), the rotor (4), and part of the outlet channel (21) and said axial outlet (20), such as illustrated in Figs. 4 and 6.

All the various embodiments mentioned above may be combined where appropriate.

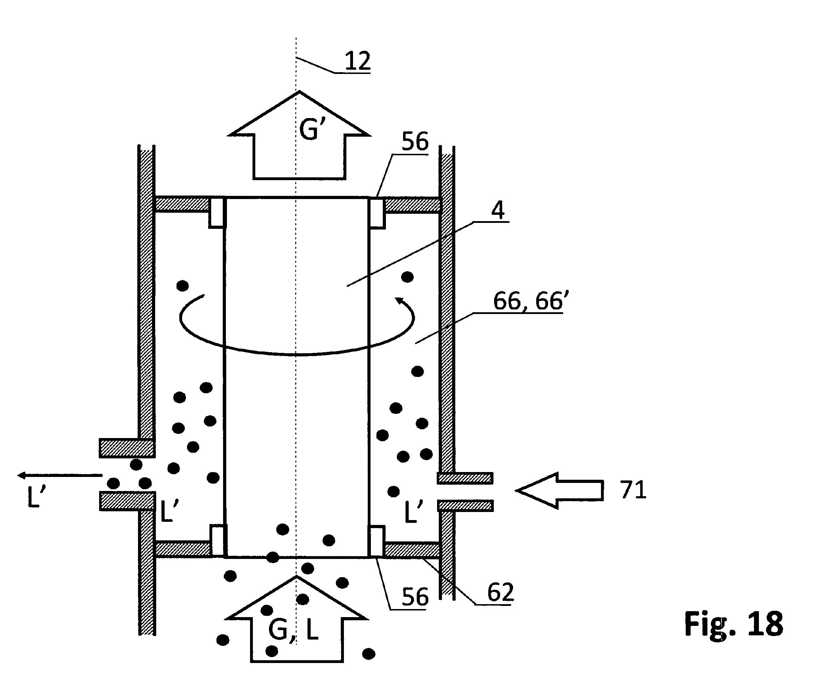

In an embodiment of the invention it is advantageous to circulate a flushing fluid into the tank such that solids, particulates or hydrates may be removed. This fluid may either be a separate fluid from a tank, which fluid may be tailored for the particular separation, or may in an embodiment of the invention be fluid which has been separated out of the flow previously. This is illustrated schematically in Fig. 18. This embodiment may be combined with the above mentioned embodiments of the invention.

In an embodiment of the invention in which the tank is compartmentalised such that a first tank volume receives the dispersed phase, and one or more second tank volumes are in fluid communication with the first tank volume and arranged for receiving fluid from the first. Such secondary tank volumes may be arranged for providing time for the fluid to degas. If larger volumes of liquids are envisaged removed, an advantageous embodiment of the invention provides a separate larger liquid chamber below or adjacent the first annular space. A separate flow pipe is advantageously arranged for transporting liquid from the first annular chamber to the second. This embodiment may be combined with the above mentioned embodiments of the invention.

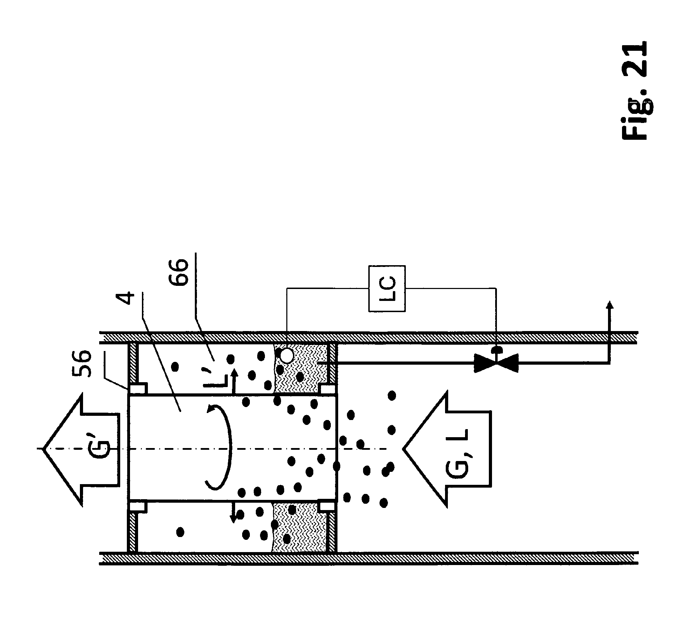

Level control of the tank volume is illustrated in fig. 21 in which a level controller (LC) is shown in conjunction with a sensor and a controlled valve such that the level within the tank is controlled. In this manner it is ensured that either a subsequent pump is provided with sufficient pressure to function correctly or that the liquid level within the tank does not rise too much. This embodiment may be combined with the above mentioned embodiments of the invention.

In another embodiment of the invention the liquid collecting wall (6) may form a general continuation of the gas flow pipe forming an intermediate portion of a wall of the inlet channel (11) and the outlet channel (21), please see Fig. 4 and a stacked or so-called "cascade" version illustrated in Fig. 8. Please notice that only a part of the mesh fill is illustrated. A compartment (66') is formed which is separated from the inlet channel (11) by an internal separator plate ring (62) and separated from the outlet channel (21) by an additional internal separator plate ring (63), please see Fig. 4. In the stacked version shown in Fig. 8 a series of internal separator plate rings separate two or more compartments (66'). This embodiment may be combined with the above mentioned embodiments of the invention, where appropriate.

In order to recirculate some of the gas or to balance the gas pressure between the inlet channel (11) and the compartment (66), the tank or compartment (66, 66') may be provided with one or more recirculation pipes (65) to the inlet channel (11), please see Figs. 4, 8, and 10. The recirculation pipes may be separate or joined in the aperture to the inlet channel (11). This embodiment may be combined with the above mentioned embodiments of the invention.

In order to balance the gas pressure between the outlet channel (21) and the compartment (66, 66'), the tank or compartment (66, 66') may be provided with one or more pressure alignment passage such as pipes (67) to the outlet channel (21), please see Fig. 4 and Fig. 8. The pressure between the outlet channel (21) and the annular space in the compartment (66, 66') surrounding the rotating mesh should be equalised. This may be required in order to make sure that there is no shortcut through the lateral parts of the mesh.

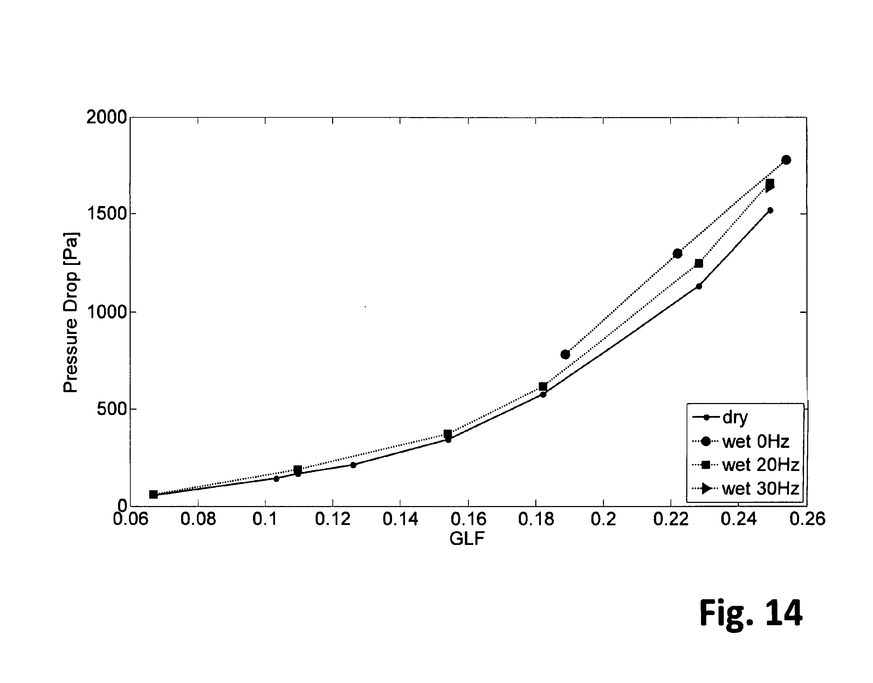

Fig. 14 shows pressure drop versus gas load factor, GLF for the same GLF values as used in Fig. 13. The pressure drop remains below 2000 Pascal (20 mBar) for all experiments using dry gas, wet gas at 0 Hz (static rotor), 20 Hz rotor speed and 30 Hz rotor speed. The dry gas has the lowest pressure drop. The wet gas has, for measurements between 0.19 m/s and 0.25 m/s the higher pressure drops, and the wet 20 Hz measurements are in between the values of the above. In general the pressure drop is low while the separation efficiency for the rotational experiments remain high, above 98%.

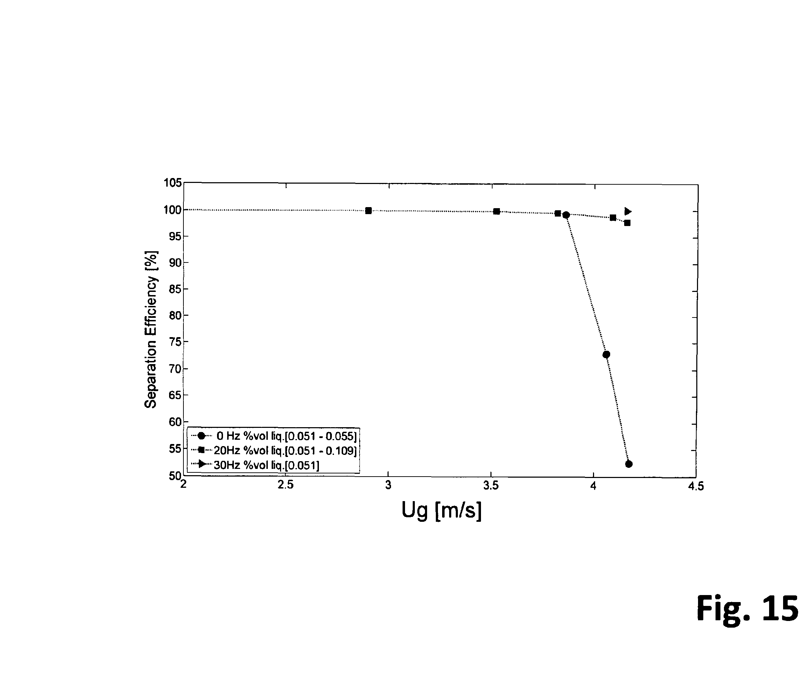

Fig. 15 shows percentage separation efficiency versus superficial gas velocity (Ug) expressed in m/s for velocity range between 2.0 m/s and 4.5 m/s for an embodiment of the invention. The graph corresponds in general to what is shown for GLF in Fig. 13. Tests were conducted using rotational speeds of 0 Hz (no rotation) 20 Hz and 30 Hz. Liquid was coalesced in the rotor (4) and liquid was drained to the collecting tank even with the coalescing meshed halted, and the gas flowing through was depleted in its liquid content. There is a sharp decrease in separation efficiency from near 100 % for zero rotational speed of the mesh at superficial velocities Ug between about 3.9 m/s and 4.1 m/s, decreasing to below 55 % for Ug about 4.2 m/s. For 20 Hz rotational speed of the mesh the separation efficiency remains at high separation efficiencies above 98% for Ug = 4.2 m/s. At 30 Hz the separation efficiency remains above 99 % for Ug = 4.2 m/s.

This figure shows how the K-factor may be varied such that different flows may be handled by the same unit.

Fig. 16, which is redrawn from C. Verlan (1989), Performance evaluation of impingement gas-liquid separators in Multiphase Flow, Proc. of the 4th International Conference, and shows percentage separation efficiency versus superficial gas velocity (Ug) expressed in m/s for velocity range between 2.0 m/s and 4.5 m/s for an air/water system. These curves are for non-rotating meshes.

If the graphs of the background art in Fig. 16 are compared with the graph of result showed by the curve for OHz rotation and % vol liq. [0,051-0,055] from Fig. 15, Fig. 15 indicates that the separator according to the present invention has better performance. One example from the graph is that the wire mesh according to the invention experiences a high separation efficiency of up to almost 100 % up to a superficial velocity of more than 3,8 m/s while the prior art meshes, without lateral opening, experiences a separation of 75% at Ug about the same level and even a lower water content.

In another embodiment of the invention the permeable mesh (5) may be amorphous such as a steel mesh pad, steel wool or the like.

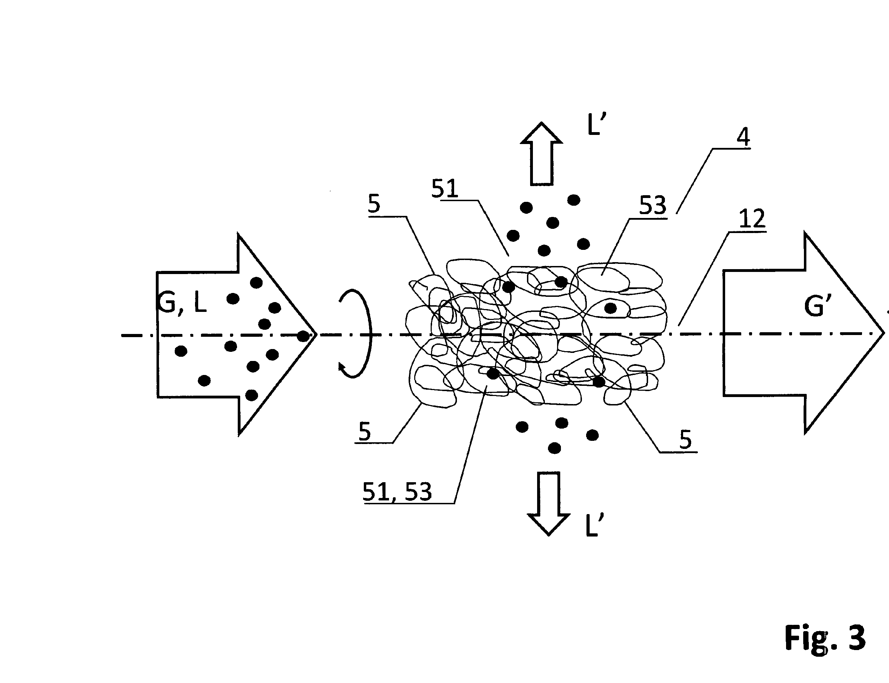

The separator according to an embodiment of the invention may have the rotor (4) arranged in an axle-less bearing (56) such as illustrated in Figs. 3, 4 and 8. Such an arrangement provides a full cross-section available for the axially passing gas flow.

The rotor (4) may be arranged for being driven by a motor (8) driven by externally provided energy (E), such as illustrated in Fig. 6. The position of the motor is illustrated downstream in Fig. 6, but the motor may be placed on the opposite side relative to the rotor. The motor may also be arranged laterally with respect to the rotor as shown in the right part of Fig. 6.

In an embodiment of the invention, the rotor (4) may be arranged for being driven by a turbine (9) in the gas flow (G) itself. Arranging the mesh directly on a turbine such that the rotation of the mesh is directly coupled to the amount of gas therethrough is a possibility.

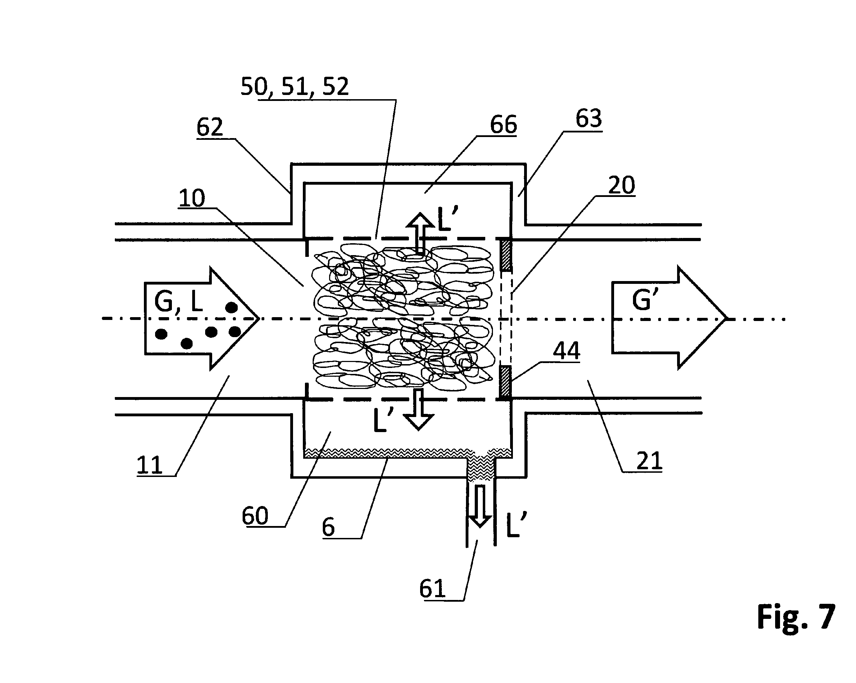

As illustrated in Fig. 7, the separator may be provided with baffle plates (44) arranged for preventing coalesced liquid (L) from being entrained with the depleted gas flow (G).

For improving the efficiency the separator according to the invention may comprise one or more consecutive rotors (4b) separated in separate consecutive compartments (66b, 66b'). This may be done in order to utilize a narrow confined space such as within a section of an existing pipe or downhole. In an embodiment of the invention the separator may have its inlet channel (11) for said gas with droplets (G, L) connected to a petroleum gas stream for separating oil droplets or water droplets from a gas flow. The outlet channel (21) will then carry the resulting liquid depleted gas (G'). Such a petroleum fluids separator may receive its petroleum gas stream through the inlet channel (11) connected to a petroleum production wellhead, either arranged subsea or on a dry tree on a production platform. This embodiment may be combined with embodiments mentioned above, where appropriate.

In another embodiment of the invention the separator may be arranged downhole, with its inlet channel (11) for gas/oil or gas/water and the outlet channel (21) forming part of a petroleum fluid production pipe within a petroleum well, and the coalesced liquid drain preferably leading to the surface if liquid is oil, and the coalesced liquid drain leading back into the well if the coalesced liquid is water, if the pressure gradient allows to do so.

In an embodiment of the invention the inlet channel (11) for the gas with droplets (G, L) is connected to a gas source comprising liquidized CO₂ droplets for separating CO₂ from gas. This may be applied for separating carbon dioxide from exhaust gases after expansion. A separator according to the invention may be used for separating out liquefied droplets such as in the production of LNG or LPG in which several cycles of cooling are used. Further, liquefaction and separation of components of air may be conducted using the invention. In general, the separator according to the invention may be arranged for separating any condensable gas in a mixture being susceptible to being separated out.

In one embodiment of the invention the separator may be used for separating water droplets from breathing air, e.g. during tracheotomy.

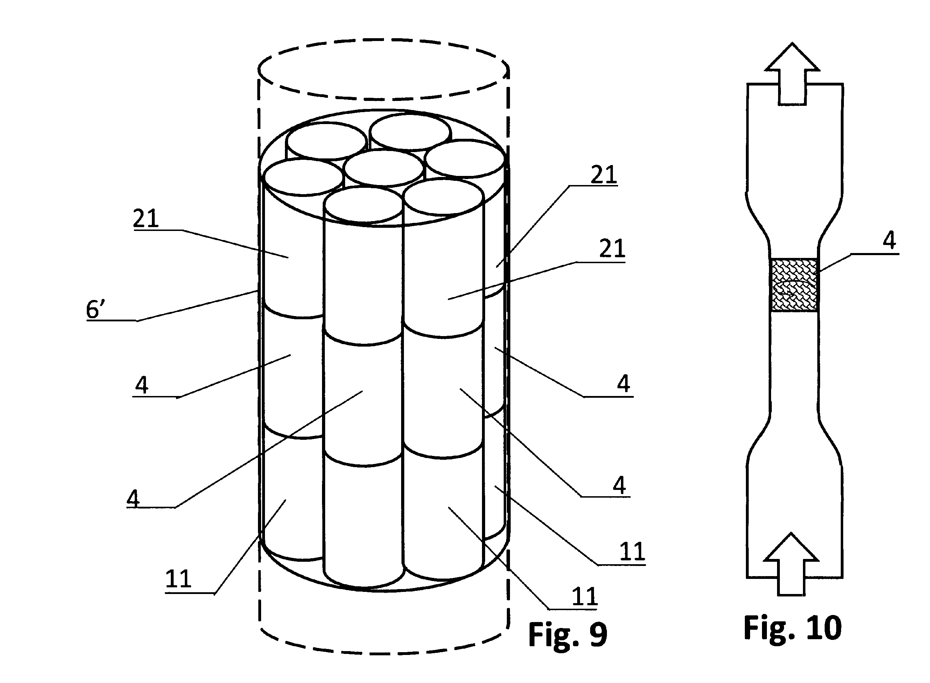

Fig. 9 illustrates an embodiment of the invention comprising a bundle of separators according to the invention. The gas flow may run either way. The separators illustrated may be arranged to work in parallel. The bundle may be arranged within a common enveloping pipe or tank (6') at least for receiving the resulting liquid (L'). The inlet channels (11) may be connected to a common inlet manifold, and the outlet channels (21) may be connected to another outlet manifold. The enveloping pipe or tank (6') may work as a common liquid collector wall, or each separator may have its own collector wall (6). The rotors (4) may be separately driven by turbines or motors or driven by a common motor.

Fig. 10 illustrates an embodiment of the invention with the rotating mesh arranged in a throat in a pipe wherein condensated matter in the gas flow may be extracted before the gas flow is again expanded, if desirable. This will not incur much pressure loss compared to existing cyclone separator techniques.

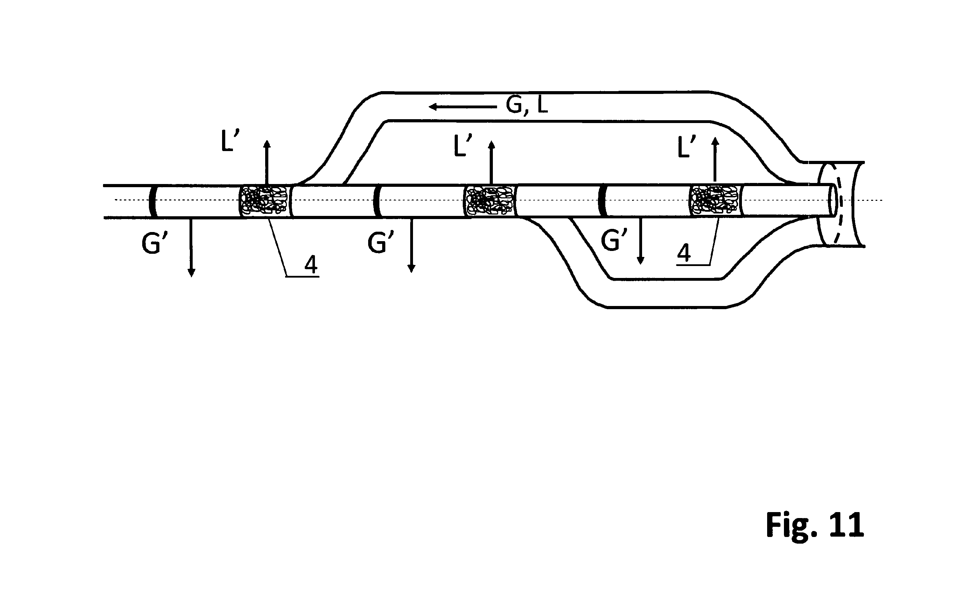

Fig. 11 is an illustration of a series of separators (4) arranged consecutively and working on a large flow (G, L) to be separated into liquid (L') and liquid depleted gas (G'). The large flow (G, L) is split ahead of a first separator. A first part of the split flow is sent to the proximal first separator, and a branched-off part of the flow is relayed to another separator more distally arranged. The separators may be arranged generally along the same axis as shown here. The separators may thus be arranged working on each their separate portion of the flow.

In an embodiment the separator according to the invention may be used in the gas outlet from a gravitation settling tank in order to remove entrained droplets from the gas.

According to an embodiment of the invention the rotor (4) may be held in magnetic bearings.

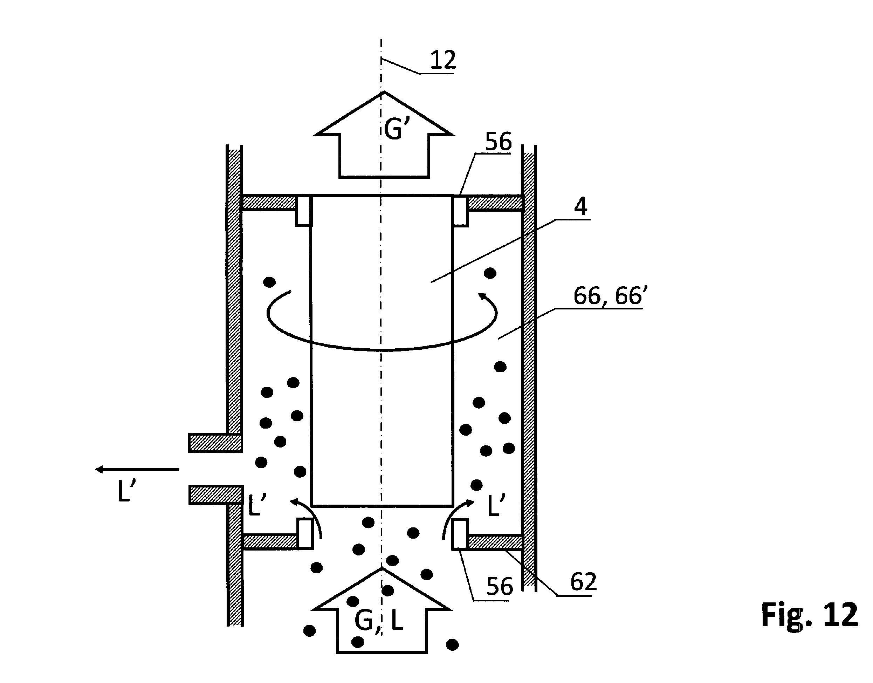

Fig. 12 is a section of an embodiment of the invention of which a rotor (4) is arranged in an axle-less bearing (56) and of which there is a radial gap at the upstream part of the mesh in order to allow the gas flow (G, L) exert a lateral pressure on the liquid (L') formed at the bottom of the annular chamber (66, 66').

In one embodiment the separator is such arranged that the gas with liquids flows mainly upwards through the mesh, such that the axis of the rotor defines an angle of +- 45 degrees to the vertical. Arrangement of the separator in a mainly upright position presents advantages in a number of situations.

In an embodiment of the invention the separator may be arranged at the inlet to a larger separator such as a settler. In this embodiment of the invention the abovementioned tank wall is not necessary as the dispersed phase will be collected by the larger separator. In such an embodiment the separator may be arranged freely after the inlet to the larger tank. As such it will function as a preseparator in which a portion of the inlet fluid will be separated prior to being treated in the larger volume. coalesced such that residence time in the larger separation tank may be lowered.

In an embodiment of the invention, the rotor (4) may be arranged for being driven by a turbine (9) in the gas flow (G) itself. The mesh may be arranged directly on a turbine such that the rotation of the mesh is directly coupled to the amount of gas therethrough.

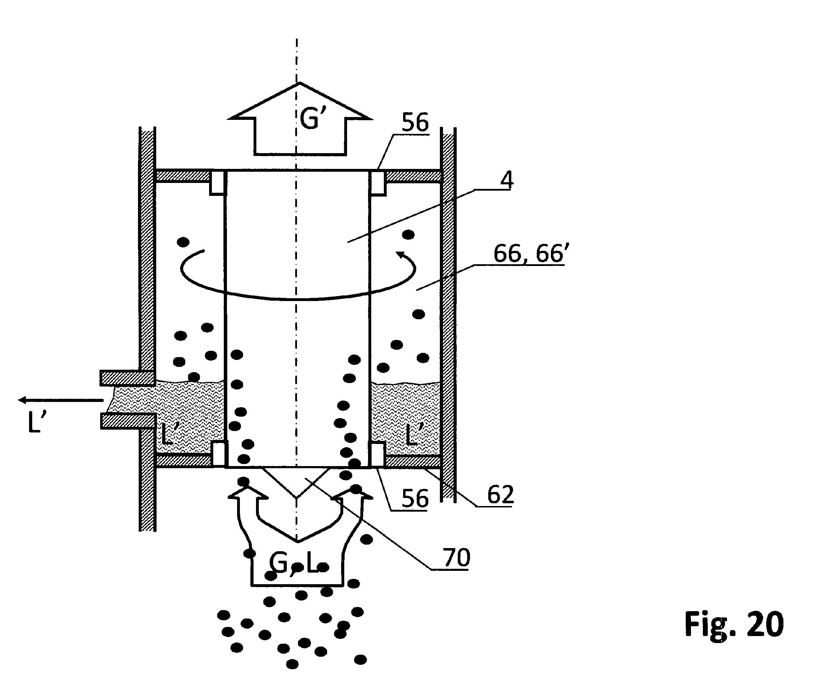

In an embodiment of the invention a flow splitter (70) is arranged at the inlet of the separator. This flow splitter will distribute the flow away from the central portion of the separator to the off center position of the mesh. This will increase separation efficiency as the velocity of the off-center areas of the mesh is greater than in the middle. In this manner it is possible to avoid fluid creep flow through the center of the mesh. An illustration of this is shown in fig 20. This embodiment may be combined with any of the above mentioned embodiments.

There are different manners by which one may promote the formation of droplets or solids. In an embodiment of the invention which may be combined with any of the above mentioned embodiments of the invention, one may arrange the separator in a constriction expansion area of a pipe as is known in the art. By this method droplets are formed through known physical phenomena by manipulating the thermodynamic envelope of the fluid.

In the embodiment of the invention in which CO₂ separation is envisaged use may be made of the so-called cold fingers method known to the skilled person. Other methods may easily be envisaged by the skilled person.

The separator according to the invention may be used for the separation of a fluid flow comprising a liquid continuous phase and a solid or liquid dispersed phase. This corresponds to the situation in which the flow comprises oil/water, or in situations in which a liquid slug in an otherwise gas continuous flow suddenly passes the separator, or in situations occurring with water with solid particles.

## Claims

1. A separator for separating a fluid flow of gas with a dispersed phase,
**characterized by**
- an axial inlet (10) for said gas with the dispersed phase to a rotating rotor (4) comprising a mesh (5) for collecting said dispersed phase,
- said mesh generally forming an axial passage for said gas from said inlet, through said rotor (4), to an outlet (20) for depleted gas (G'),
- said rotor (4) being axleless, and
- said rotor (4) with said mesh for releasing said dispersed phase laterally out of said axial passage.

2. The separator of claim 1 in which the rotor (4) is arranged for being operated at varying speeds according to the fluid flow composition.

3. The separator of claim 1 or 2 in which a flow splitter (70) is arranged for diverting the inlet flow from a central area along the axis of rotation of the rotor (4).

4. The separator of claims 1-3 in which a tank is provided surrounding said rotor, the tank being arranged for receiving dispersed fluid laterally released from said axial passage.

5. The separator according to claim 4 in which said mesh does only partially fills the entire rotor volume, such that a portion of the fluid flow is diverted directly to the tank.

6. The separator of claim 4 or 5 in which a level controller is arranged for controlling the fluid level in the tank.

7. The separator of claims 4 - 6 in which the tank (66) is compartementalised such that a first tank volume receives the dispersed phase, and one or more second tank volumes in fluid communication with the first tank volume are arranged for receiving fluid from the first tank volume.

8. The separator of claims 4-7 in which a fluid line is arranged for providing flushing fluid to the tank (66) such that particulates are removed from said tank (66).

9. The separator of claims 4-8 in which said tank or compartment (66, 66') comprises a recirculation pipe (65) to said inlet channel (11).

10. The separator of any of the above claims in which the rotor (4) is driven by a turbine (9) or a motor (8).

11. The separator according to any of the above claims in which said mesh (5) comprises two or more mesh grades.

12. The separator of any of the preceding claims in which said mesh (5) is formed based on a metal foam.

13. The separator of claim 1, said separator being arranged in a constriction expansion device ().

14. The separator of any of claims 1-13, said separator arranged for separating a petroleum fluid stream.

15. The separator of any of claims 1-13, said gas (G) comprising liquidized CO₂ droplets (L).
